# EUROPÄISCHE PATENTSCHRIFT

(11) **EP 2 791 989 B1**
(45) Veröffentlichungstag und Bekanntmachung des Hinweises auf die Patenterteilung: **28.10.2015**
(21) Anmeldenummer: 12787005.3
(22) Anmeldetag: 15.11.2012
(51) Int. Cl.: H01M 2/02, F16B 2/00

(54) **GEHÄUSE FÜR EINE BATTERIEZELLE MIT EINER LACKBESCHICHTUNG ZUR ELEKTRISCHEN ISOLATION, BATTERIEZELLE, BATTERIE SOWIE KRAFTFAHRZEUG**
HOUSING FOR A BATTERY CELL, COMPRISING A PAINT COATING FOR ELECTRICAL INSULATION, BATTERY CELL, BATTERY, AND MOTOR VEHICLE
BOÎTIER POUR UN ÉLÉMENT DE BATTERIE COMPORTANT UN REVÊTEMENT EN VERNIS DESTINÉ À L'ISOLATION ÉLECTRIQUE, ÉLÉMENT DE BATTERIE ET BATTERIE POUR UN VÉHICULE À MOTEUR

(30) Priorität: 15.12.2011 DE 102011088739
(43) Veröffentlichungstag der Anmeldung: 22.10.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: DUERNEGGER, Wolfgang, 73614 Schorndorf (DE)
(74) Vertreter: Bee, Joachim
(86) Internationale Anmeldenummer: PCT/EP2012/072767
(87) Internationale Veröffentlichungsnummer: WO 2013/087351

(56) Entgegenhaltungen:
- WO-A2-2005/119814
- US-A- 6 127 002

## Beschreibung

Die vorliegende Erfindung betrifft ein Gehäuse für eine Batteriezelle mit einer Lackbeschichtung zur elektrischen Isolation, eine Batteriezelle, eine Batterie sowie ein Kraftfahrzeug.

### Stand der Technik

In Fahrzeugen mit zumindest teilweisem elektrischen Antrieb kommen elektrische Energiespeicher zum Einsatz, um die elektrische Energie für den Elektromotor, welcher den Antrieb unterstützt beziehungsweise als Antrieb dient, zu speichern. In den Fahrzeugen der neuesten Generation finden hierbei sogenannte Lithium-Ionen-Batterien Verwendung. Diese zeichnen sich unter anderem durch hohe Energiedichten und eine äußerst geringe Selbstentladung aus. Lithium-Ionen-Batteriezellen besitzen mindestens eine positive und eine negative Elektrode (Kathode bzw. Anode), die Lithium-Ionen (Li⁺) reversibel ein-(Interkalation) oder wieder auslagern (Deinterkalation) können.

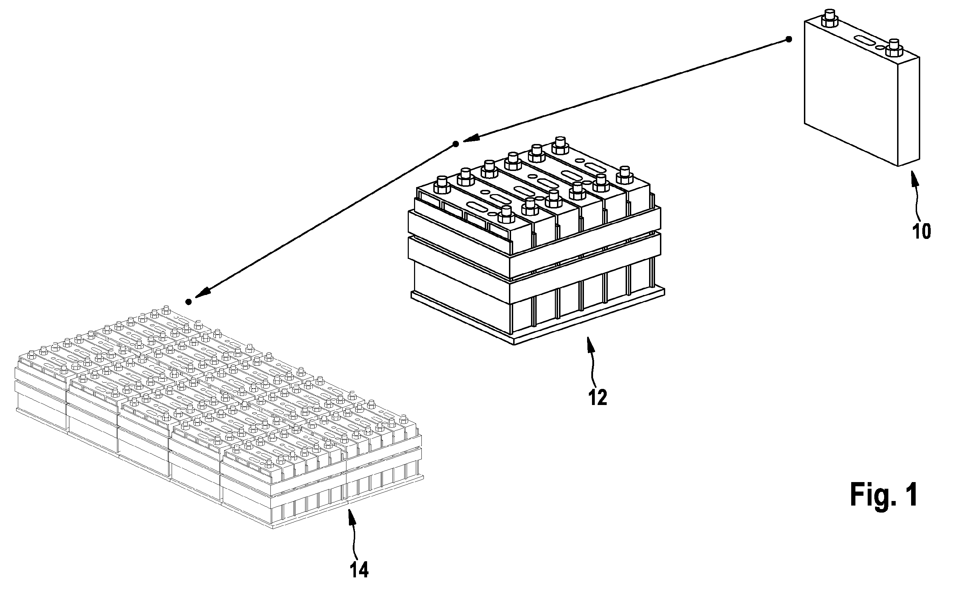

Figur 1 zeigt, wie einzelne Batteriezellen 10 zu Batteriemodulen 12 und dann zu Batterien 14 zusammengefasst werden können. Dies erfolgt durch eine nicht dargestellte Parallel- oder Reihenschaltung der Pole. Dabei besteht per Definition ein Batteriemodul 12 beziehungsweise eine Batterie 14 aus mindestens zwei Batteriezellen 10.

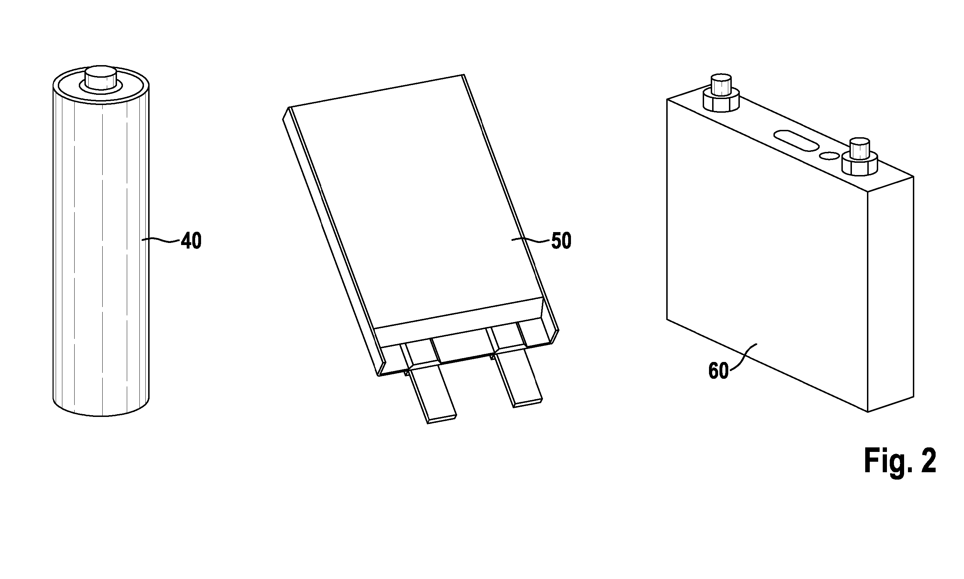

Figur 2 zeigt verschiedene Gehäuse- und Verpackungstypen für Lithium-Ionen-Zellen, hier exemplarisch eine zylindrische Hardcasezelle 40, eine sogenannte Pouch-Zelle 50 (Softpack) und eine prismatische Hardcasezelle 60. Die beiden Ausführungsformen mit Hardcasegehäusen weisen dabei jeweils einen metallischen Grundkörper auf, der zu Zwecken der Isolation mit einer Folie, einem Lack oder dergleichen aus einem elektrisch nicht leitenden Material bedeckt ist. Rein metallische Batteriezellengehäuse für Lithium-Ionen-Zellen, bei denen ein Potenzial auf dem Gehäuse liegt, müssen also nach außen elektrisch isoliert werden, wenn sie zu Hochvoltbatterien konfektioniert werden. Zur elektrischen Isolierung der Zellen werden insbesondere spezielle Isolationslacke eingesetzt.

Nach dem Stand der Technik werden insbesondere Lithium-Ionen-Batteriezellen fest miteinander verspannt, so dass eine Ausdehnung im Betrieb aufgrund der Ein- und Auslagerung der Ionen weitestgehend unterbunden wird. Die Verspannung stellt zusätzlich sicher, dass die verschalteten Batteriezellen an eine Komponente zur Temperierung kontaktiert und kraftschlüssig während des regulären Produktgebrauchs und im Crash-Fall fixiert sind.

Zur Funktionserfüllung der beschriebenen Verspannung müssen die im Kraftschluss liegenden Oberflächen der Zellen, je nach Aufbau der Lithium-Ionen-Batterie, hohe Reibwerte aufweisen, deren Betrag vom Design der Lithium-Ionen-Batterie abhängt.

Im Falle von zu geringen Reibwerten zwischen den im Kraftschluss liegenden Zelloberflächen können Relativbewegungen zwischen den Zellen auftreten, die Beschädigungen an der Lithium-Ionen-Batterie hervorrufen können.

Aus der DE 10 2010 009 901 A1 ist es bekannt, eine reibungserhöhende Beschichtung, beispielsweise eine Molybdänbeschichtung zu verwenden, um eine stabile Verbindung von Bauteilen zu erzielen.

In der WO 2005/119814 A2 ist ein Verfahren zur Herstellung eines Batteriegehäuses offenbart, wobei die äußere Schicht aus einem elektrisch isolierenden Polymermaterial besteht.

### Offenbarung der Erfindung

Erfindungsgemäß wird ein Gehäuse für eine Batteriezelle, vorzugsweise eine Lithium-Ionen-Batteriezelle zur Verfügung gestellt, das mit einer Lackbeschichtung zur elektrischen Isolation versehen ist, wobei die Lackbeschichtung klebstoffhaltige Partikel enthält, deren Klebstoff unter definierten Bedingungen aktivierbar ist.

Wie bereits beschrieben, werden Batteriezellen, insbesondere Lithium-Ionen-Batteriezellen miteinander verspannt, wobei die im Kraftschluss liegenden Oberflächen der Gehäuse der Batteriezellen definierte Reibwerte aufweisen sollen, um die Stabilität der Batterie zu gewährleisten.

Durch die klebstoffhaltigen Partikel der Lackbeschichtung, die unter definierten Bedingungen Klebstoff freisetzen, vorzugsweise druck- bzw. kraftinitiiert, temperaturinitiiert, strahlungsinitiiert oder chemisch motiviert, besonders bevorzugt druck- bzw. kraftinitiiert zerplatzen, ist es möglich, den Reibungskoeffizienten der Gehäuse der Batteriezellen während der Assemblierung gezielt zu erhöhen. Der Klebstoff gelangt dadurch auf die Oberfläche der Lackbeschichtung.

Daher kann vorteilhafterweise die Anordnung der einzelnen Gehäuse in Relation zueinander problemlos erfolgen und erst beim Verspannen der Batteriezellen kommt es zu einer Erhöhung des Reibungskoeffizienten durch den aktivierten Klebstoff.

Vorteilhafterweise werden hierbei auch nur die klebstoffhaltigen Partikel der für die Verspannung erforderlichen Funktionsflächen aktiviert, so dass die verspannte Batterie auf ihren Außenflächen einen geringeren Reibungskoeffizienten besitzt, das heißt, der Reibkoeffizient wird lediglich an Oberflächen beeinflusst, die im Kraftfluss liegen. Dadurch wird die Handhabung bzw. der Produktionsablauf einer entsprechenden Batterie wesentlich erleichtert.

Eine Aktivierung des Klebstoffs kann auch bei Kontaktierung der Batterie beispielsweise mit einem Kühlelement vorgesehen werden, auf dem die Batterie üblicherweise angeordnet wird, da auch hier ein sicherer Kontakt zur sicheren Temperierung der Batterie notwendig ist.

Materialien zur Herstellung entsprechender Partikel sind dem Fachmann aus dem Stand der Technik bekannt, wobei diese bevorzugterweise durch den Klebstoff selber ausgebildet sein können. Beispielsweise kann dazu die äußere Schicht des Klebstoffs zur Ausbildung des Partikels ausgehärtet sein. Durch die Aktivierung platzt diese Schicht, so dass der enthaltene Klebstoff austreten kann und damit aktiv wird.

Ansonsten können die klebstoffhaltigen Partikel unterschiedlich beschaffen sein, wobei eine Ausgestaltung als mit Klebstoff gefüllter Hohlkörper bevorzugt wird.

Es ist auch möglich, dass die Partikel eine poröse Struktur besitzen, in der der Klebstoff befindlich ist, wobei der Klebstoff durch die Aktivierung aus dieser Struktur austreten kann bzw. herausgepresst wird.

Geeignete Klebstoffe aus dem Bereich der physikalisch abbindenden Klebstoffe, der chemisch härtenden Klebstoffe oder der Klebstoffe ohne Verfestigungsmechanismen sind dem Fachmann allgemein bekannt, wobei diese je nach den Anforderungen ausgewählt werden.

Dabei ist auch die Verwendung von 2-Komponenten-Klebstoffen möglich, wobei hierzu lediglich zwei unterschiedliche Partikel in die Lackbeschichtung integriert werden müssen. Beim Freisetzen der Komponenten, beispielsweise durch Druck, erfolgt die gewünschte chemische Reaktion zur Bildung des Klebstoffes.

Die Größe der Partikel kann grundsätzlich beliebig gewählt werden und kann im makroskopischen, mikroskopischen oder Nanobereich liegen.

Mittels der Größe der Partikel und der eingesetzten Menge in Relation zur Fläche kann, wie auch durch eine entsprechende Auswahl des Klebstoffs, der gewünschte Reibungskoeffizient gezielt eingestellt werden.

Eine selektive Anpassung des Reibungskoeffizienten kann auch dadurch erfolgen, dass die Anzahl der zerplatzten klebstoffhaltigen Partikel von der initialen Anpressung der im Kraftfluss liegenden Oberflächen abhängt, das heißt, ein geringerer Reibungskoeffizient wird bei einer geringeren initialen Anpressung erhalten und ein höherer Reibungskoeffizient bei einer höheren initialen Anpressung. Dieses Verhalten ist durch eine geeignete Auswahl der Partikel und des verwendeten Klebstoffs möglich oder durch Verwendung von Partikeln in unterschiedlichen Größen.

Durch die erfindungsgemäße Ausgestaltung von Gehäusen für Batteriezellen kann vorteilhafterweise die Auswahl der zu Isolationszwecken eingesetzten Lacksysteme primär nach den Isolationseigenschaften erfolgen.

Nach einer besonders bevorzugten Ausführungsform der Erfindung weist die Lackbeschichtung zwei Schichten auf. So ist eine Basisisolierung vorgesehen, die keine Partikel aufweist und eine optimale Isolierung gewährleistet. Diese wiederum kann aus einer Schicht bestehen oder mehrere Schichten aufweisen. Darauf befindet sich mindestens eine zweite Lackschicht, die die Partikel enthält.

Beide Schichten können aus demselben Lack bestehen. Es ist aber auch möglich, unterschiedliche Lacke auszuwählen.

Durch diesen bevorzugten Aufbau der Lackbeschichtung kann vorteilhafterweise eine Anpassung des Reibungskoeffizienten ohne Veränderung der Eigenschaften des Basisisolationssystems vorgenommen werden.

Damit stehen Lacksysteme mit individuell anpassbarem Reibungskoeffizient zur Verfügung, die die Produktzuverlässigkeit erhöhen und eine Gefährdung, wie eingangs beschrieben, ausschließen.

Bezug nehmend auf die voranstehenden Ausführungen ist es möglich, Gemische verschiedenartiger Partikel hinsichtlich der Geometrie und der Größe, Gemische von Partikeln aus verschiedenen Materialien, Gemische von Partikeln mit verschiedenartigem Aufbau, beispielsweise Hohlkörper und poröser Körper, Gemische mit Partikeln verschiedenartiger mechanischer, elektrischer, chemischer und thermischer Eigenschaften sowie deren Kombination zu verwenden.

Gegenstand der vorliegenden Erfindung sind auch eine Batteriezelle, die in einem erfindungsgemäßen Gehäuse angeordnet ist und vorzugsweise eine Lithium-Ionen-Zelle ist, eine Batterie, die zumindest zwei dieser Batteriezellen aufweist, sowie ein Kraftfahrzeug mit einem elektrischen Antriebsmotor zum Antreiben des Kraftfahrzeugs und einer mit dem elektrischen Antriebsmotor verbundenen oder verbindbaren Batterie.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 eine Batteriezelle, ein Modul und eine Batterie;
Figur 2 verschiedene Gehäuse und Verpackungstypen von Lithium-Ionen Zellen;
Figur 3 eine Detailansicht eines erfindungsgemäßen Gehäuses für eine Batteriezelle mit nicht aktivierten klebstoffhaltigen Partikeln, und
Figur 4 eine Detailansicht von erfindungsgemäßen Gehäusen für Batteriezellen mit aktivierten klebstoffhaltigen Partikeln.

### Ausführungsformen der Erfindung

Auf die Figuren 1 und 2 wurde bereits zur Erläuterung des Standes der Technik eingegangen.

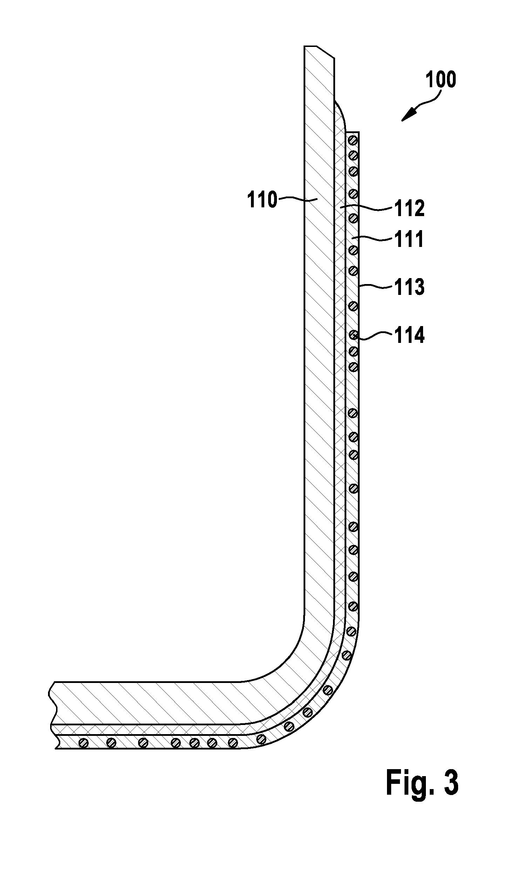

Figur 3 zeigt ein Detail eines Gehäuses 100 für eine Batteriezelle. Auf der Außenseite der Wandung 110 des Gehäuses 100 ist eine Lackbeschichtung 111 zur elektrischen Isolation befindlich. Die Lackbeschichtung 111 besteht aus mindestens zwei Schichten, wobei direkt auf der Wandung 110 eine Basisisolierung 112 vorgesehen ist, die mit einer äußeren Lackschicht 113 versehen ist. In der äußeren Lackschicht 113 sind klebstoffhaltige Partikel 114 verteilt, deren Klebstoff durch definierte Bedingungen aktivierbar bzw. freisetzbar ist.

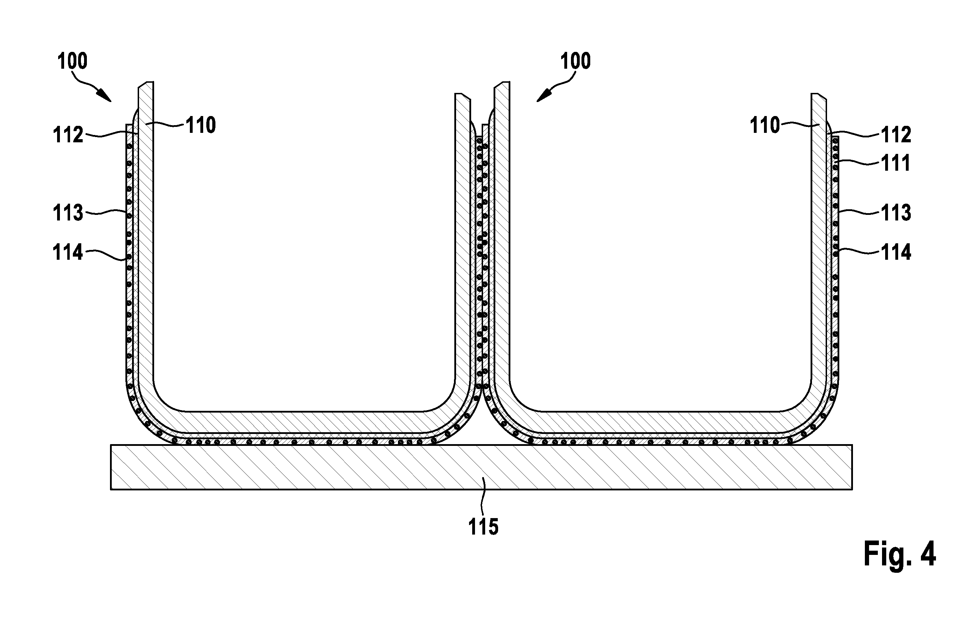

In Figur 4 sind erfindungsgemäße Gehäuse 100 dargestellt, deren miteinander in Kontakt stehende Flächen durch Aktivierung der klebstoffhaltigen Partikel 114 miteinander verklebt sind. Die Bezugszeichen entsprechen denen aus Figur 3. Die beiden Gehäuse 100 sind zudem auf einer Kälteplatte 115 zur Temperierung angeordnet, wobei auch hier die in Kontakt stehenden Flächen durch Aktivierung der klebstoffhaltigen Partikel 114 miteinander verbunden sind.

## Patentansprüche

1. Ein Gehäuse für eine Batteriezelle mit einer Lackbeschichtung (111) zur elektrischen Isolation, **dadurch gekennzeichnet, dass** die Lackbeschichtung (111) klebstoffhaltige Partikel (114) enthält, deren Klebstoff unter definierten Bedingungen aktivierbar ist.

2. Das Gehäuse nach Anspruch 1, wobei die Aktivierung des Klebstoffs druckinitiierbar, temperaturinitiierbar, strahlungsinitiierbar oder chemisch motivierbar ist.

3. Das Gehäuse nach Anspruch 1 oder 2, wobei die Partikel (114) mit Klebstoff gefüllte Hohlkörper sind oder die Partikel (114) eine poröse Struktur besitzen, in der der Klebstoff befindlich ist.

4. Das Gehäuse nach einem der Ansprüche 1 bis 3, wobei die Partikel (114) in zumindest zwei unterschiedlichen Größen vorliegen.

5. Das Gehäuse nach einem der Ansprüche 1 bis 4, wobei die Lackbeschichtung (111) eine direkt auf dem Gehäuse (100) angeordnete Basisisolierung (112) und mindestens eine auf der Basisisolierung (112) befindliche Lackschicht (113) aufweist, die mit den klebstoffhaltigen Partikeln (114) versehen ist.

6. Eine Batteriezelle, **dadurch gekennzeichnet, dass** die Batteriezelle ein Gehäuse (100) nach einem der Ansprüche 1 bis 5 aufweist.

7. Die Batteriezelle nach Anspruch 6, wobei die Batteriezelle eine Lithium-Ionen-Zelle ist.

8. Eine Batterie mit mindestens zwei Batteriezellen nach Anspruch 6 oder 7.

9. Ein Kraftfahrzeug mit einem elektrischen Antriebsmotor zum Antreiben des Kraftfahrzeugs und einer mit dem elektrischen Antriebsmotor verbundenen oder verbindbaren Batterie gemäß Anspruch 8.

## Claims

1. Housing for a battery cell, comprising a varnish coating (111) for electrical insulation, **characterized in that** the varnish coating (111) contains adhesive-containing particles (114), the adhesive of which can be activated under defined conditions.

2. Housing according to Claim 1, the activation of the adhesive being capable of initiation by pressure, initiation by temperature, initiation by radiation or capable of chemical motivation.

3. Housing according to Claim 1 or 2, the particles (114) being hollow bodies filled with adhesive or the particles (114) possessing a porous structure, inside which the adhesive is present.

4. Housing according to one of Claims 1 to 3, the particles (114) being present in at least two different sizes.

5. Housing according to one of Claims 1 to 4, the varnish coating (111) exhibiting a basic insulation (112) arranged directly on the housing (100) and at least one layer of varnish (113) present on the basic insulation (112), which layer of varnish is provided with the adhesive-containing particles (114).

6. Battery cell, **characterized in that** the battery cell exhibits a housing (100) according to one of Claims 1 to 5.

7. Battery cell according to Claim 6, the battery cell being a lithium-ion cell.

8. Battery having at least two battery cells according to Claim 6 or 7.

9. Motor vehicle having an electric drive motor for driving the motor vehicle and a battery according to Claim 8 that is connected or connectable to the electric drive motor.

## Revendications

1. Boîtier pour une cellule de batterie comprenant un revêtement de laque (111) pour l'isolation électrique, **caractérisé en ce que** le revêtement de laque (111) contient des particules contenant de l'adhésif (114), dont l'adhésif peut être activé dans des conditions définies.

2. Boîtier selon la revendication 1, dans lequel l'activation de l'adhésif peut être amorcée par la pression, la température, les rayonnements ou chimiquement.

3. Boîtier selon la revendication 1 ou 2, dans lequel les particules (114) sont des corps creux remplis d'adhésif, ou les particules (114) possèdent une structure poreuse dans laquelle se trouve l'adhésif.

4. Boîtier selon l'une quelconque des revendications 1 à 3, dans lequel les particules (114) se présentent en au moins deux dimensions différentes.

5. Boîtier selon l'une quelconque des revendications 1 à 4, dans lequel le revêtement de laque (111) présente une isolation de base (112) disposée directement sur le boîtier (100) et au moins une couche de laque (113) se trouvant sur l'isolation de base (112), laquelle est pourvue des particules contenant de l'adhésif (114).

6. Cellule de batterie, **caractérisée en ce que** la cellule de batterie présente un boîtier (100) selon l'une quelconque des revendications 1 à 5.

7. Cellule de batterie selon la revendication 6, dans laquelle la cellule de batterie est une cellule à ions lithium.

8. Batterie comprenant au moins deux cellules de batterie selon la revendication 6 ou 7.

9. Véhicule automobile comprenant un moteur d'entraînement électrique pour l'entraînement du véhicule automobile et une batterie selon la revendication 8 connectée ou pouvant être connectée au moteur d'entraînement électrique.
